# EUROPEAN PATENT SPECIFICATION

(11) **EP 2 066 073 B1**
(45) Date of publication and mention of the grant of the patent: **22.02.2012**
(21) Application number: 07291416.1
(22) Date of filing: 28.11.2007
(51) Int. Cl.: H04L 12/18, H04L 12/28, H04L 12/56

(54) **Access system and method for multicast management**
Zugangssystem und -verfahren zur Mehrfachsendungsverwaltung
Système d'accès et procédé pour gestion de multidiffusion

(43) Date of publication of application: 03.06.2009
(73) Proprietor: Alcatel Lucent, 75007 Paris (FR)
(72) Inventor: Barri, Peter, 2820 Bonheiden (BE); Desseyn, Frank, 9790 Wortegem-Petegem (BE); Helsen, Alex, 2960 Brecht (BE)
(74) Representative: Narmon, Gisèle Marie Thérèse

(56) References cited:
- EP-A- 1 734 688
- EP-A1- 1 819 093
- US-A1- 2006 120 368
- SCOTT SHOAF ET AL: "IGMP Capabilities in Broadband Network Architectures" INTERNET CITATION, [Online] XP002459905 Retrieved from the Internet: URL:http://www.juniper.net/solutions/liter ature/app_note/350060.pdf> [retrieved on 2007-11-26]

## Description

The present invention relates to an access system for managing multicast data streams using a group membership protocol, and in particular to an improved digital subscriber line access multiplexer (DSLAM), comprising:
- a plurality of network links;
- a plurality of subscriber lines grouped into a plurality of modules, each module having a module processing unit; and
- a multicast (MC) enabled router between said plurality of network links and said plurality of modules, said router being arranged for forwarding MC streams to one or more modules according to a router MC forwarding database.

The invention further relates to a method for managing multicast streams with improved processing of group membership protocol messages, according to the preamble of claim 6.

The document entitled "IGMP Capabilities in Broadband Network Architectures" by Scott Shoaf et all., discloses in figure 12 a DSLAM with local replication using transparent IGMP snooping.

US 2006/0120368 A1 discloses the execution of IGMP functions on the line termination cards of a DSLAM instead of at the Network Termination card.

EP 1 819 093 A1 discloses that the IGMP functions are executed at slave blocks instead of at the master block of ADSL equipment in order to reduce the processing load of the master block.

In multicasting, data from a single source, typically a video server, are sent to multiple destinations over a network supporting the internet protocol (IP). An IP Multicast (MC) group address is used by sources and the receivers (hosts) to send and receive content. Sources use the group address as the IP destination address in their data packets. Receivers use this group address to inform the network that they are interested in receiving packets sent to that group. A Multicast Router replicates and delivers the received packets using a multicast forwarding table. At the user-end, access systems are used to deliver multicast data streams from the local multicast router to a host or a group of hosts.

At present, the Internet Group Management Protocol (IGMP) is the preferred signalling protocol used between the local router and the host for supporting multicast communications. IGMP is a protocol used to manage the membership of multicast (MC) groups. To achieve the benefit of conserving bandwidth on those segments of the network where no node has expressed interest in receiving packets addressed to the multicast group address when using IGMP, it is well known to use snooping, wherein the MC enabled router, also called switch, forwarder or bridge, follows the IGMP conversation between hosts and routers and keeps track of a MC forwarding database, i.e. a membership list for each MC group.

The implementation Draft-ietf-magma-snoop-12.txt (Full Transparant Snooper), published as RFC4541 is available from http://www.ietf.org/rfc/rfc4541.txt, and is incorporated herein by reference. RFC4541 requires that the DSLAM passes all IGMP messages in transparent mode to the local router, i.e. all IGMP messages have to be transparently forwarded. However, in such an implementation, all IGMP messages coming from the line interface modules need to be snooped by the processing unit of the MC enabled router of the access device for determining which users are connected to each Multicast group and for updating its multicast forwarding table accordingly.

Due to the fact that all IGMP messages need to be snooped, the processing resources of the controller of the MC enabled router of the access system are typically way too low to handle the desired traffic. A typical access system, e.g. a DSLAM, is for example a system with the following features: 1 k multicast (MC) groups per Line Interface Module (LIM); 16 LIMs; 48 DSL lines per LIM; 4 set top boxes (STB) per port; 4 simultaneous programs per STB; 0,1 zaps per second per STB; on average 4 IGMP messages per zap; IGMPv2 General Membership Query (GMQ) max response time = 25s. In such an access device, between 1000 and 2000 messages per second (on average 1228 messages/s due to ZAPs and 491 response messages/s) need to be treated. The problem is that the processing capacity of a controller of a typical MC enabled router, is only about 300 messages per second.

A straightforward solution to the above mentioned problem would be to provide a more powerful processor for the MC enabled router of the access device. However, this would result in a very costly solution for the access device.

The object of the invention is to provide an access system and method according to the preamble of claim 1 and 6, respectively, reducing the processing resources necessary for the MC enabled router of the access system.

To reach this object, the access system according to the invention is distinguished in that each line interface module grouping a number of subscriber lines, is arranged for forwarding multicast streams to one or more subscriber lines, according to a module MC forwarding database indicating the active subscribers for each MC group, and that each line interface module processing unit is arranged for communicating with the MC enabled router for updating the router MC forwarding database indicating the active line interface modules for each MC group on the basis of the information in the module MC forwarding database.

The method of the invention is distinguished in that it comprises the following steps:
- exchanging standard group membership protocol messages between the subscribers and the local router;
- exchanging first group membership protocol messages between each line interface module and the subscribers connected thereto for updating a module MC forwarding database indicating the active subscribers for each MC group, and
- exchanging second group membership protocol messages between each line interface module and the MC enabled router for updating a router MC forwarding database indicating the active line interface modules for each MC group.

In that way the router MC forwarding database of the MC enabled router is updated by special messages coming from the modules. Hence, the MC enabled router does not have to check all standard group membership protocol messages coming from the subscriber lines for updating its router MC forwarding database. In other words, each module checks if there is a change in the multicast streams to be sent to it, and informs the MC enabled router accordingly. For example, a second user of a module entering a multicast group in which a first user of the same module was already present will not have to be notified to the MC enabled router, while a user of a module requesting to enter a new MC group not yet streamed to the same module will require a special message from the module to the MC enabled router for updating the router MC forwarding database.

In access systems of the prior art all IGMP messages sent from the subscriber lines to the MC enabled router were passed by the line interface modules for processing in the MC enabled router. It is clear that this required the processing of a much larger number of messages compared to the system of the invention.

Also it is noted that the line interface modules and the MC enabled router are in practice typically provided with the same type of processor. The system of the invention has the advantage that the processing capacity necessary to manage the forwarding of MC data streams to the subscriber lines is much better distributed over the processors in the access system than in the prior art systems. Indeed, each module processor has to treat a number of group membership protocol messages which is roughly equal to the total number of group membership protocol messages divided by the number of modules, and the processor of the MC enabled router only has to treat the special messages sent by the modules.

For the exemplary access system with the configuration given on page 2, assuming that 80 percent of the users will join 20 percent of the MC streams and that these 20 percent will always be forwarded to the modules, the number of messages due to zapping will be 1228 messages/second divided by 5, i.e. roughly 250 messages/second. The number of special query messages sent from the MC enabled router to the line interface modules can be tailored to keep the total number of incoming messages below the allowable maximum. These special query messages will be further elucidated in the figure description below.

According to a preferred embodiment of the invention each module is arranged to keep track of at least the following status information:
- one of the subscriber lines of a module requesting to join a new MC group not yet present in the MC forwarding database of the same module;
- one of the subscriber lines of a module leaving a MC group only forwarded to this subscriber line of the same module. Further each module processing unit is preferably configured for sending a message to the MC enabled router reporting this status information.

In case of a last subscriber leaving a certain MC group, the module will typically send a leave message to the MC enabled router indicating that the module no longer requires a certain MC group to be streamed to it. The MC enabled router will then update its router MC forwarding database accordingly. Further the following messages will typically be exchanged:
- query messages sent from the MC enabled router to the LIM at specific time intervals requesting each module to indicate in which MC groups it is still interested, and
- report messages sent from each module to the MC enabled router replying to said query messages.

The time interval between subsequent query messages may be chosen large enough to avoid a too high processing burden on the MC enabled router. Also the response time for sending report messages may be set to a suitable value.

According to a further developed embodiment of the method of the invention the first group membership protocol messages exchanged between a module and the subscribers connected thereto are using a standard IGMP format and the second special group membership protocol messages are using a format identical to the IGMP format but having a different IP protocol number enabling the MC enabled router to distinguish these special messages from standard IGMP messages. The skilled person will understand that other group membership protocol formats are possible, such as MLD (Multicast Listener Discovery). It is clear that the scope of the invention comprises any group membership protocol.

The accompanying drawings are used to illustrate presently preferred non-limiting exemplary embodiments of the present invention. The above and other advantages features and objects of the invention will become more apparent and the invention will be better understood from the following detailed description when read in conjunction with accompanying drawings in which:
- Figure 1 is a schematic drawing of a typical IP multicast architecture;
- Figure 2 is a schematic drawing of a typical configuration of an access device;
- Figure 3 is a schematic drawing of an embodiment of the access system according to the invention illustrating the processing of query and report messages;
- Figure 4 is a schematic drawing of the access system of figure 3 illustrating the processing of leave messages.

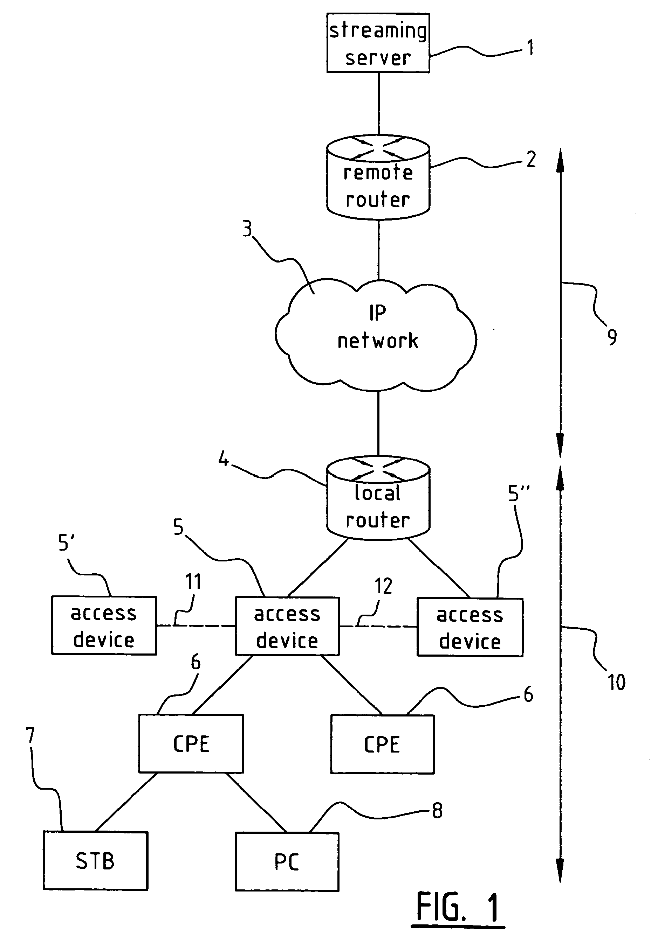

Figure 1 illustrates schematically a typical multicast IP architecture. At the head end, a streaming server 1, such as a video server, sends a multicast stream to a remote router 2, which sends out the multicast stream over an IP network 3 to a local router 4. Between the remote router 2 and the local router 4 a multicast routing protocol 9 is used, such as Distance Vector Multicast Routing Protocol (DVM-RP) or Protocol Independent Multicast (PIM), etc. The local router 4 communicates with a number of access devices 5, 5', 5" which are connected to several user terminals, such as setup box (STB) 7 or a PC 8, via a Customer Premises Equipment (CPE) 6. In between the local router 4 and the access devices 5, 5', 5" there is typically a L2 aggregation network.

Note that access devices may be cascaded, such as access device 5 connected via a branch 11 with access device 5', in which case access device 5' is called a subtending access device. Also access devices may be placed in a ring topology, such as access devices 5 and 5" which are connected via a branch 12.

The communication between the local router 4 and a host 7, 8 (user terminal) uses typically a group membership protocol, such as the Internet Group Management Protocol (IGMP) 10. Reference is made to the introduction for more details about IGMP.

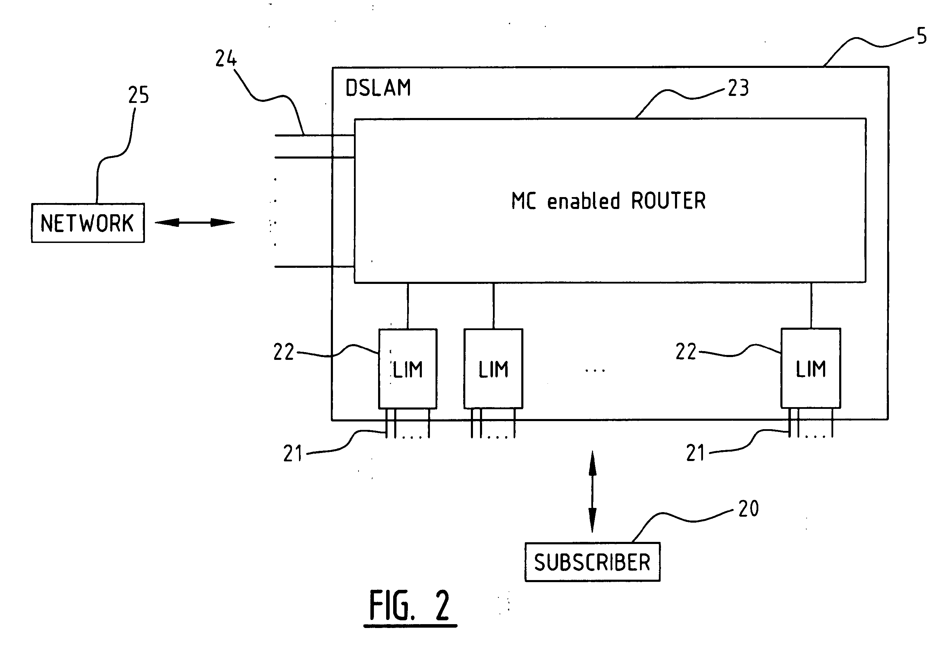

Figure 2 shows a typical configuration of an access system, in particular of a digital subscriber line access multiplexer (DSLAM). A DSLAM typically comprises at the subscriber end:
- a number of subscriber ports (e.g. xDSL links, fibre such as P2P fibre); the subscriber ports are typically grouped in the form of line interface modules (LIMs), in particular DSL cards which have up to a maximum number of subscriber ports, for example 48 DSL links per card; and at the network end:
- a number of network terminations or links (uplinks) 24 to the upstream network.

Between the network links 24 and the line interface modules 22 a MC enabled router 23 is provided, also referred to as MC enabled forwarder, virtual router, switch or bridge.

According to the prior art, the LIMs 22 are passing all upstream IGMP messages to the MC enabled router 23 which passes these messages to the network interface and makes a copy to the CPU of the MC enabled router for further analysis. According to an embodiment of the invention, the LIMs 22 are still passing all upstream group membership protocol messages to the network, but the MC enabled router 23 does not make copies to the CPU thereof. However, the MC enabled router 23 is informed by the LIMs of changes in its leaf configuration by special messages from the LIMs 22.

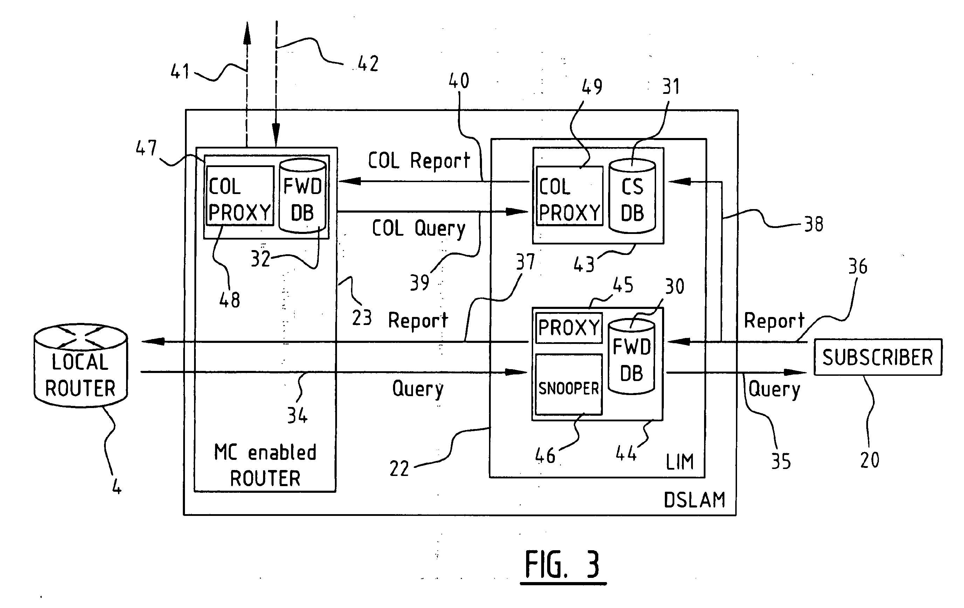

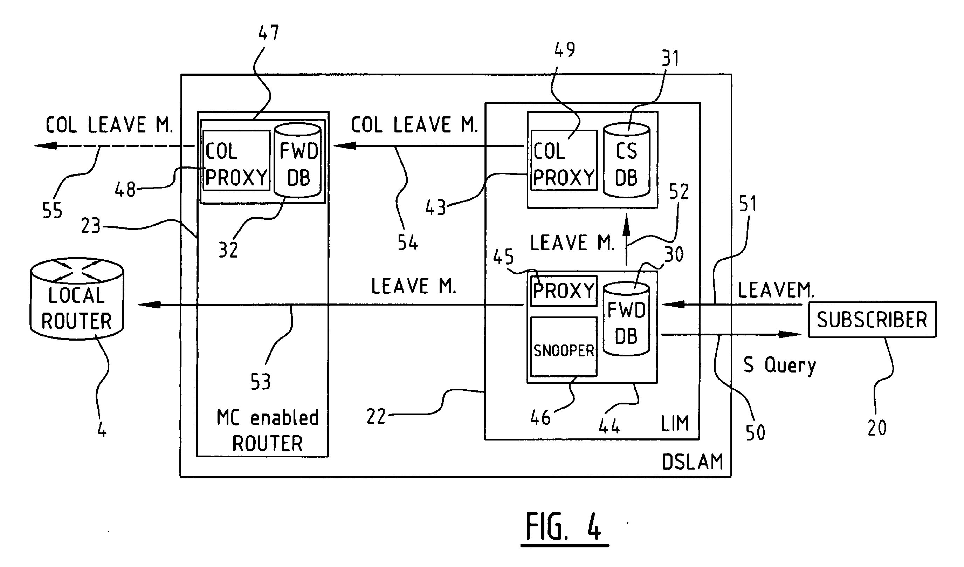

Now, a possible embodiment of an access system of the invention with a special function in the LIM for sending special messages to the MC enabled router 23 will be discussed referring to figures 3 and 4. Each LIM 22 is amongst other functions arranged for:
- (1) sending and receiving group membership protocol messages 34-37, 50-51, 53 and updating a LIM MC forwarding database 30 in accordance with received group membership protocol reports 36 and leave messages 51 from the subscriber 20. This function is performed by a first subsystem 44 comprising two major functional blocks: a group membership protocol snooper 46, for example an IGMP snooper, and a group membership protocol proxy 45, for example a simple version of a standard IGMP proxy; the snooper 46 basically only looks at the packets that are passing the LIM, while the proxy 45 will send group membership protocol messages.
- (2) sending and receiving special messages 39, 40, 54 to and from the MC enabled router 23, respectively. The content of the special messages sent by the LIM 22 is based on information in a status database 31. This function is performed by a second subsystem 43 comprising a slightly modified group membership proxy, called coloured proxy 49 in figures 3 and 4.

LIM MC Forwarding database 30 will typically contain a list with the following information:
- MC groups (with the MC group addresses), e.g. Ch1, Ch2, Ch3, and
- for each MC group the active subscriber ID's, e.g. STB1, STB2, etc.

LIM status data base 31 will typically keep track of only the state of each MC group, i.e. whether or not there are any active subscriber's connected to a certain MC group. Note that this information is directly derivable from the LIM MC forwarding database 30 and that a separate status database 31 is not strictly necessary, but facilitates the explanation of the special messages.

In an independent cycle, the group membership protocol proxy 45 of the first subsystem 44 initiates General Membership Queries (GMQ) 35 to the subscriber side. The information received in reply through membership reports 36 is used to update the LIM MC forwarding database 30. As shown in figure 3, these membership reports 36 can be further relayed (see branch 38) to the second subsystem 43 which uses this information to update the current state database 31. This audit cycle is completely independent from the audit cycle initiated by the network side.

According to a variant (not shown) the reports 36 are not relayed and the information necessary for the current state database 31 is derived directly from the LIM MC forwarding database 30.

In order to periodically audit the MC forwarding table 32 of the MC enabled router, there is typically provided a subsystem 47 with a so-called coloured proxy function 48. At periodic time intervals the subsystem 47 of the MC enabled router 23, generates special query messages, called "coloured" GMQs 39 towards the LIM via a dedicated signalling channel identified by a IP protocol number which is at present not used. These coloured messages are for example using a format identical to the IGMP format but have a different IP protocol number which indicates which protocol is being transported in the IP packet. This enables the LIM 22 and the MC enabled router 23 to distinguish between coloured messages and other messages.

Such a coloured query message requests to report the current state database 31, and the LIM will reply with a special report message 40, called a coloured group membership protocol report indicating the MC streams that are still of interest to the LIM. Upon the receipt of the coloured membership reports 40 the controller of the MC enabled router 23 updates its MC forwarding database 32 where necessary. Note that the router MC forwarding database 32 will typically contain a list with the following information:
- MC groups (with the MC address), e.g. Ch1, Ch2, Ch3, and
- for each MC group the active LIMs.

In order to achieve a better load distribution, the interval of the coloured query messages can be set to 125 sec or larger and the maximum response time can be set to almost the same value as the query interval.

Further, coloured GMQs 41 may be sent to any subtending access systems 5' and/or to any adjacent access systems 5" in the same ring (see figure 1). These access systems will then reply with coloured membership reports 42. In that way the MC forwarding database 32 of the MC enabled router 23 can also be updated with any changes in the MC streams coming from these access systems 5', 5". Note further that the standard non-coloured report packets 37 that originate from the LIM are transparently forwarded by the router 23 and are not redirected to the subsystem 47.

When a subscriber no longer wishes to receive a certain MC stream, he sends a leave message 51 to the LIM 22 (see figure 4). The first subsystem 44 can be configured to trigger a so called FAST leave procedure where no confirmation is requested, or can be configured to perform the standard leave procedure where a GSQ (group specific query) message 50 is sent to the subscriber asking for confirmation. If the fast leave procedure is implemented, the MC stream is stopped immediately and the second subsystem 43 is informed. In case of the standard leave procedure, once it is confirmed that the multicast stream is no longer required on a particular subscriber line, the multicast stream is stopped and the second subsystem 43 is informed with a leave message 52. If the subscriber was the last member leaving the MC group the current state database 31 will be changed accordingly.

The second subsystem 43 updates the router MC forwarding database 32 of the MC enabled router through so called coloured leave messages. Again these coloured messages use a format identical to the group membership protocol format but have a different IP protocol number. Typically, the second subsystem 43 will only send a coloured leave message 54 to the MC enabled router 23, if it was the last user on the LIM leaving a certain MC group. The MC enabled router 23 will preferably apply a FAST Leave procedure (i.e. without requesting confirmation) since the LIM behaviour can be considered as group membership protocol proxy behaviour.

Further, in case of a subtending access systems 5' or other access systems 5" of the same ring, a coloured leave message 55 is sent to these access systems.

Note further that the standard non-coloured leave packets 53 that originate from the LIM are transparently forwarded by the MC enabled router 23 and are not redirected to the subsystem 47.

The MC enabled router 23 may further contain a dynamic router port database (not shown). This is a known aspect of a MC access system and does not form part of the invention.

As mentioned above group membership protocol proxy functions 45, 49 will be running in the LIMs 22 in order to be able to process the normal and coloured messages. The proxy function 45 on top of the snooping function 46 is typically a simple version of a regular IGMP proxy function, and the coloured proxy function 49 is typically a slightly modified regular IGMP proxy function, so that no special measures are necessary for the implementation thereof.

It is noted that it would also be possible to send the coloured messages in a different format, but this would typically require additional proxy functionality in the LIMs and in the MC enabled router. Therefore, from a cost perspective this option is less preferable.

While the principles of the invention have been set out above in connection with specific embodiments, it is to be clearly understood that this description is merely made by way of example and not as a limitation of the scope of protection which is determined by the appended claims.

## Claims

1. Access system (5) for managing multicast data streams of a number of multicast groups using a group membership protocol, comprising:
- a plurality of network links (24) for connection with a local router (4);
- a plurality of subscriber lines (21) grouped into a plurality of line interface modules (22), each line interface module having a line interface module processing unit; and
- a multicast, MC, enabled router (23) between said plurality of network links and said plurality of line interface modules, said router being arranged for forwarding MC streams to one or more line interface modules according to a router MC forwarding database;
**characterized in that**
each line interface module (22) is arranged for forwarding multicast streams to one or more subscriber lines of this line interface module according to a module MC forwarding database (30) indicating the active subscribers for each MC group, and that
each line interface module processing unit is arranged for communicating with the multicast enabled router for updating the router MC forwarding database indicating the active line interface modules for each MC group.

2. Access system as claimed in claim 1, wherein standard group membership protocol messages are exchanged between the subscriber lines and the network links, **characterized in that** the MC enabled router is arranged for passing all standard group membership protocol messages coming from either the subscriber lines or the network links transparently without snooping.

3. Access system as claimed in claim 1, **characterized in that** each line interface module is arranged to keep track of the following status information:
- one of the subscriber lines of a line interface module requesting to join a new MC group not yet present in the MC forwarding database of the same line interface module;
- one of the subscriber lines of a line interface module leaving an MC group only forwarded to this subscriber line of the same line interface module.

4. Access system as claimed in claim 3, **characterized in that** each line interface module processing unit is configured for sending a message to the MC enabled router reporting this status information.

5. Access system as claimed in claim 1, **characterized in that** each line interface module is provided with a group membership protocol snooper system (46) for snooping group membership protocol messages for updating its line interface module MC forwarding database (30).

6. Method for managing multicast data streams of a number of multicast groups in an access system using a group membership protocol, said access system connecting a plurality of subscribers (20) with a local router (4) via a multicast, MC, enabled router (23)and a plurality of line interface modules (22) each grouping a number of subscribers, comprising:
- exchanging standard group membership protocol messages between the subscribers and the local router (4);
**characterized in that**
- each line interface module is exchanging first group membership protocol messages with the subscribers connected thereto for updating a line interface module MC forwarding database (30) indicating the active subscribers for each MC group, and that
- each line interface module is exchanging second group membership protocol messages with the MC enabled router for updating a router MC forwarding database (32) indicating the active line interface modules for each MC group.

7. Method as claimed in claim 6, **characterized in that** the first group membership protocol messages are using a standard IGMP format and that the second group membership protocol messages are using a format identical to the IGMP format but having a different IP protocol number enabling the MC enabled router to distinguish these messages from standard IGMP messages.

8. Method as claimed in claim 7, **characterized in that** the standard group membership protocol messages coming from either the subscribers or the network links are transparently passed through the MC enabled router without processing thereof, the updating of the router MC forwarding database being based on the second group membership protocol messages.

9. Method as claimed in claim 6, **characterized in that** the second group membership protocol messages comprise leave messages sent from each line interface module to the MC enabled router indicating that said line interface module no longer requires a certain MC group to be streamed to it.

10. Method as claimed in claim 6, **characterized in that** the second group membership protocol messages comprise:
- query messages sent from the MC enabled router to the plurality of line interface modules at specific time intervals requesting each line interface module to indicate in which MC groups it is still interested, and
- report messages sent from each line interface module to the MC enabled router replying to said query messages.

## Patentansprüche

1. Zugangssystem (5) für die Verwaltung von Multicast-Datenströmen einer Anzahl von Multicast-Gruppen unter Verwendung eines Gruppenmitgliedschaftsprotokolls, umfassend:
- Eine Mehrzahl von Netzwerk-Links (24) für die Verbindung mit einem lokalen Router (4);
- eine Mehrzahl von Teilnehmeranschlüssen (21), die in eine Mehrzahl von Leitungsschnittstellenmodulen (22) gruppiert sind, wobei jedes Leitungsschnittstellenmodul eine Leitungsschnittstellenmodul-Verarbeitungseinheit aufweist; und
- einen Multicast- bzw. MC-fähigen Router (23) zwischen der besagten Mehrzahl von Netzwerk-Links und der besagten Mehrzahl von Leitungsschnittstellenmodulen, wobei der besagte Router für das Weiterleiten von MC-Strömen an ein oder mehrere Leitungsschnittstellenmodule gemäß einer Router-MC-Weiterleitungsdatenbank ausgelegt ist;
**dadurch gekennzeichnet, dass**
jedes Leitungsschnittstellenmodul (22) für das Weiterleiten von Multicast-Strömen an einen oder mehrere Teilnehmeranschlüsse dieses Leitungsschnittstellenmoduls gemäß einer Modul-MC-Weiterleitungsdatenbank (30), welche die aktiven Teilnehmer für jede MC-Gruppe anzeigt, ausgelegt ist, und dass
jede Leitungsschnittstellenmodul-Verarbeitungseinheit für die Kommunikation mit dem multicastfähigen Router zur Aktualisierung der Router-MC-Weiterleitungsdatenbank, welche die aktiven Leitungsschnittstellenmodule für jede MC-Gruppe anzeigt, ausgelegt ist.

2. Zugangssystem nach Anspruch 1, wobei zwischen den Teilnehmeranschlüssen und den Netzwerk-Links Standard-Gruppenmitgliedschaftsprotokollnachrichten ausgetauscht werden, **dadurch gekennzeichnet, dass** der MC-fähige Router für das transparente Weiterleiten, ohne Mitlesen, aller entweder von den Teilnehmeranschlüssen oder den Netzwerk-Links kommenden Standard-Gruppenmitgliedschaftsprotokollnachrichten ausgelegt ist.

3. Zugangssystem nach Anspruch 1,
**dadurch gekennzeichnet, dass** jedes Leitungsschnittstellenmodul dazu ausgelegt ist, die folgenden Statusinformationen zu verfolgen:
- Eines der Teilnehmeranschlüsse eines Leitungsschnittstellenmoduls, welcher den Beitritt zu einer neuen MC-Gruppe, die noch nicht in der MC-Weiterleitungsdatenbank desselben Leitungsschnittstellenmoduls vorhanden ist, anfordert;
- eines der Teilnehmeranschlüsse eines Leitungsschnittstellenmoduls, welcher eine nur an diesen Teilnehmeranschluss desselben Leitungsschnittstellenmoduls weitergeleitete MC-Gruppe verlässt.

4. Zugangssystem nach Anspruch 3,
**dadurch gekennzeichnet, dass** jede Leitungsschnittstellenmodul-Verarbeitungseinheit für das Senden einer Nachricht, welche diese Statusinformation meldet, an den MC-fähigen Router konfiguriert ist.

5. Zugangssystem nach Anspruch 1,
**dadurch gekennzeichnet, dass** jedes Leitungsschnittstellenmodul ein Gruppenmitgliedschaftsprotokoll-Snooper-System (46) zum Mitlesen von Gruppenmitgliedschaftsprotokollnachrichten für die Aktualisierung dessen Leitungsschnittstellenmodul-MC-Weiterleitungsdatenbank (30) aufweist.

6. Verfahren zur Verwaltung von Multicast-Datenströmen einer Anzahl von Multicast-Gruppen in einem Zugangssystem unter Verwendung eines Gruppenmitgliedschaftsprotokolls, wobei das besagte Zugangssystem eine Mehrzahl von Teilnehmern (20) über einen Multicast- bzw. MC-fähigen Router (23) und eine Mehrzahl von Leitungsschnittstellenmodulen (22), welche jeweils eine Anzahl von Teilnehmern gruppieren, mit einem lokalen Router verbindet, umfassend:
- Austauschen von Standard-Gruppenmitgliedschaftsprotokollnachrichten zwischen den Teilnehmern und dem lokalen Router (4);
**dadurch gekennzeichnet, dass**
- jedes Leitungsschnittstellenmodul erste Gruppenmitgliedschaftsprotokollnachrichten mit den an dieses angeschlossenen Teilnehmern für die Aktualisierung einer Leitungsschnittstellenmodul-MC-Weiterleitungsdatenbank (30), welche die aktiven Teilnehmer für jede MC-Gruppe anzeigt, austauscht, und dass
- jedes Leitungsschnittstellenmodul zweite Gruppenmitgliedschaftsprotokollnachrichten mit dem MC-fähigen Router für die Aktualisierung einer Router-MC-Weiterleitungsdatenbank (32), welche die aktiven Leitungsschnittstellenmodule für jede MC-Gruppe anzeigt, austauscht.

7. Verfahren nach Anspruch 6, **dadurch gekennzeichnet, dass** die ersten Gruppenmitgliedschaftsprotokollnachrichten das Standard-IGMP-Format verwenden, und dass die zweiten Gruppenmitgliedschaftsprotokollnachrichten ein Format verwenden, welches mit dem IGMP-Format identisch ist, jedoch eine unterschiedliche IP-Protokollnummer aufweist, um es dem MC-fähigen Router zu ermöglichen, diese Nachrichten von den Standard-IGMP-Nachrichten zu unterscheiden.

8. Verfahren nach Anspruch 7, **dadurch gekennzeichnet, dass** die entweder von den Teilnehmern oder von den Netzwerk-Links kommenden Standard-Gruppenmitgliedschaftsprotokollnachrichten transparent ohne deren Verarbeitung durch den MC-fähigen Router weitergeleitet werden, wobei die Aktualisierung der Router-MC-Weiterleitungsdatenbank auf den zweiten Gruppenmitgliedschaftsprotokollnachrichten basiert.

9. Verfahren nach Anspruch 6, **dadurch gekennzeichnet, dass** die zweiten Gruppenmitgliedschaftsprotokollnachrichten LEAVE-Nachrichten umfassen, welche von jedem Leitungsschnittstellenmodul an den MC-fähigen Router gesendet werden und angeben, dass das besagte Leitungsschnittstellenmodul keine Ausstrahlung einer bestimmten MC-Gruppe an dieses mehr wünscht.

10. Verfahren nach Anspruch 6, **dadurch gekennzeichnet, dass** die zweiten Gruppenmitgliedschaftsprotokollnachrichten umfassen:
- Abfragenachrichten, die in spezifischen Zeitintervallen von dem MC-fähigen Router an die Mehrzahl von Leitungsschnittstellenmodulen gesendet werden, um jedes Leitungsschnittstellenmodul aufzufordern, anzugeben, an welchen MC-Gruppen es noch interessiert ist, und
- REPORT-Nachrichten, die als Antwort auf die besagten Abfragenachrichten von jedem Leitungsschnittstellenmodul an den MC-fähigen Router gesendet werden.

## Revendications

1. Système d'accès (5) pour gérer des flux de données de multidiffusion d'un nombre de groupes de multidiffusion à l'aide d'un protocole d'affiliation à un groupe, comprenant:
- une pluralité de liaisons de réseau (24) à connecter avec un routeur local (4) ;
- une pluralité de lignes d'abonné (21) groupées en une pluralité de modules d'interface de ligne (22), chacun des modules d'interface de ligne possédant une unité de traitement de module d'interface de ligne ; et
- un routeur (23) compatible multidiffusion, MC, entre ladite pluralité de liaisons de réseau et ladite pluralité de modules d'interface de ligne, ledit routeur étant agencé pour transférer des flux MC à un ou plusieurs modules d'interface de ligne conformément à une base de données de transfert du routeur MC ;
**caractérisé en ce que**
chacun des modules d'interface de ligne (22) est agencé pour transférer des flux de multidiffusion à une ou plusieurs lignes d'abonné de ce module d'interface de ligne conformément à une base de données de transfert du module MC (30) indiquant les abonnés actifs pour chacun des groupes MC, et **en ce que**
chaque unité de traitement de module d'interface de ligne est agencée pour communiquer avec le routeur compatible multidiffusion en vue de mettre à jour la base de données de transfert du routeur MC indiquant les modules d'interface de ligne actifs pour chacun des groupes MC.

2. Système d'accès selon la revendication 1, dans lequel des messages du protocole d'affiliation à un groupe standard sont échangés entre les lignes d'abonné et les liaisons de réseau,
**caractérisé en ce que** le routeur compatible MC est agencé pour transmettre tous les messages de protocole d'affiliation à un groupe standard issus des lignes d'abonné ou des liaisons de réseau de manière transparente et sans surveillance.

3. Système d'accès selon la revendication 1,
**caractérisé en ce que** chacun des modules d'interface de ligne est agencé pour conserver une trace des informations de statut suivantes :
- une des lignes d'abonné d'un module d'interface de ligne demande d'adhérer à un nouveau groupe MC encore non présent dans la base de données de transfert MC du même module d'interface de ligne ;
- une des lignes d'abonné d'un module d'interface de ligne quitte un groupe MC uniquement transféré à cette ligne d'abonné du même module d'interface de ligne.

4. Système d'accès selon la revendication 3,
**caractérisé en ce que** chacune des unités de traitement de module d'interface de ligne est configurée pour envoyer un message au routeur compatible MC en l'informant de ces informations de statut.

5. Système d'accès selon la revendication 1,
**caractérisé en ce que** chacun des modules d'interface est fourni avec un système de surveillance de protocole d'adhésion à un groupe (46) pour surveiller les messages de protocole d'adhésion à un groupe en vue de mettre à jour sa base de données de transfert MC des modules d'interface de ligne (30).

6. Procédé de gestion des flux de données de multidiffusion d'un nombre de groupes de multidiffusion dans un système d'accès à l'aide d'un protocole d'adhésion à un groupe, ledit système d'accès connectant une pluralité d'abonnés (20) avec un routeur local (4) via un routeur (23) compatible multidiffusion, MC, et une pluralité de modules d'interface de ligne (22) regroupant chacun un nombre d'abonnés, comprenant :
- l'échange de messages de protocole d'adhésion à un groupe standard entre les abonnés et le routeur local (4) ;
**caractérisé en ce que**
- chacun des modules d'interface de ligne échange des premiers messages de protocole d'adhésion à un groupe avec les abonnés qui y sont connectés pour mettre à jour une base de données de transfert de module d'interface de ligne MC (30) indiquant les abonnés actifs pour chacun des groupes MC, et **en ce que**
- chacun des modules d'interface de ligne échange des deuxièmes messages de protocole d'adhésion à un groupe avec le routeur compatible MC pour mettre à jour une base de données de transfert de routeur MC (32) indiquant les modules d'interface de ligne actifs pour chacun des groupes MC.

7. Procédé selon la revendication 6, **caractérisé en ce que** les premiers messages de protocole d'adhésion à un groupe utilisent un format IGMP standard et **en ce que** les deuxièmes messages de protocole d'adhésion à un groupe utilisent un format identique au format IGMP mais possédant un numéro de protocole IP différent permettant au routeur compatible MC de distinguer ces messages des messages IGMP standard

8. Procédé selon la revendication 7, **caractérisé en ce que** les messages de protocole d'adhésion à un groupe standard issus des abonnés ou des liaisons de réseau sont transmis de manière transparente à travers le routeur compatible MC sans traitement, la mise à jour de la base de données de transfert du routeur MC étant basée sur les deuxièmes messages de protocole d'adhésion à un groupe.

9. Procédé selon la revendication 6, **caractérisé en ce que** les deuxièmes messages de protocole d'adhésion à un groupe comprennent des messages Quitter envoyés par chacun des modules d'interface de ligne au routeur compatible MC et indiquant que ledit module d'interface de ligne n'exige plus aucune émission d'un certain groupe MC.

10. Procédé selon la revendication 6, **caractérisé en ce que** les deuxièmes messages d'adhésion à un groupe comprennent :
- des messages de requête envoyés par le routeur compatible MC à la pluralité de modules d'interface de ligne à des intervalles de temps spécifiques et demandant à chaque module d'interface de ligne d'indiquer à quels groupes MC il s' intéresse encore, et
- des messages de rapport envoyés par chacun des modules d'interface de ligne au routeur compatible MC en réponse auxdits messages de requête.
